# EUROPEAN PATENT APPLICATION

(11) **EP 1 617 661 A2**
(43) Date of publication of application: **18.01.2006**
(21) Application number: 05105833.7
(22) Date of filing: 29.06.2005
(51) Int. Cl.: H04N 5/91

(54) **Device for receiving signal and a method of signal loss management during recording of analogue or digital signal**

(30) Priority: 12.07.2004 PL 36905704
(71) Applicant: Advanced Digital Broadcast Polska Spolka z o.o., 65-119 Zielona Gora (PL); Advanced Digital Broadcast Ltd., Hsin-Tien City Taipei County 231 (TW)
(72) Inventor: Przybylek, Piotr, 65-119, Zielona Gora (PL)
(74) Representative: Hudy, Ludwik

(57) **Abstract**

A device for receiving an analogue or digital signal is provided with a processor (120) managing operation of the device, a memory, a signal loss management block (121), a block (123) storing information on a recording process in the memory and a television signal recording management block (122) generating data describing the recording process of the analogue or digital signal and cooperating with the signal loss management block (121) and the block (123) storing information on the recording process. The information received form the signal loss management circuit (121) and the signal recording management block (122) are stored in a recording description file. A signal playback block (124) fetches the information from the recording description file during signal playback and controls playback of a recorded signal according to the information fetched from the recording description file.

## Description

The invention relates to a device for receiving a signal and a method of signal loss management during recording of analogue or digital signal, for example, at loss of television signal.

Often, when recording televised material, it happens that the receiver is not able to receive a correct signal. This can be caused by interferences in programme broadcasting, a break in programme broadcasting or deficiencies in the power supply of the receiver. In order to create stable conditions for watching television programmes, television receivers are equipped with circuits continuously controlling the operation of the television receiver, which execute remedial actions as needed.

There is a solution, known from the American patent description no. US 4,837,623, entitled *"Television interrupt circuit"*. In this solution, if the television signal is lost, both the audio signal of the demodulator and the video signal create generate an output signal for the television receiver which contains disturbances. The appropriate circuit of this solution detects a loss of signal, sends an appropriate signal informing about such event and both the audio and the video signals are not sent to the receivers. Additionally, other audio and video signals are sent by the microprocessor to the CRT display and speakers. These signals inform the user about a lack of the source signal.

There is a system, known from the published patent application no. US 20030026590 A1 entitled *"Signal processing apparatus".* An internal data stream is generated in this system and checks if the system is receiving the input data stream and whether when the input source stream is not being received instead of input data, the data of the stream generated in the device are displayed. If the device can record signals, despite the loss of the source stream, the data of the supplementary stream, generated in the device, is stored in the non-volatile memory.

From publication of the patent application no. US 20020054753 A1 entitled *"Recording device which handles recording reservations and recording method, which handles recording reservations"* are known input television signal receiving block, a device recording this signal and a system of recording reservation. The recording device from this solution contains a recording control circuit, the task of which is to stop recording, when the input video signal cannot be read from its source.

In typical PVR or DVR systems, known from the prior art, in the event of a loss of the signal during recording, the whole recording is lost or only a part of it is retained in the receiver from the beginning of the programme until the loss of the signal.

In another applied solution, if the user programmed 15 minutes of the recording and a loss of the television signal occurred between the 5^{th} and the 10^{th} minute, the first 5 minutes of the program would be recorded and next 10 minutes from the moment when the television signal next became available. In effect, the memory of the receiver the user had 5 minutes of recording which was not recorded. During the playback, at the time, the signal loss occurred, a jump of the image can occur, however, the duration is displayed from 0 to 15 minutes sequentially (regardless of the break), which might mislead the user an object of the present invention to provide a simple device for resolving the problem of handling losses of a broadcast television signal, or a power-supply signal failure during recording of audio/video material. The system should record the whole programme and if possible, consider the real time of programme duration and limit the size of the space occupied in the non-volatile memory of the television receiver.

The aim of the present invention is to propose a method of creating a description of the recording, which includes information on any loss of access to a correct source signal and a method of storing and managing this information.

The idea of the invention is that the device for receiving analogue or digital television signal, capable of signal recording and equipped with a processor to operate the device, containing a television signal recording management block, and equipped with a memory, incorporates a signal loss management circuit and a circuit generating data, which describes the recording process of the analogue or digital signal, cooperating with the signal loss management circuit and a block of storing information on the recording process in the memory, which processes information from the signal loss management circuit, and the circuit generating data, describing the recording process and recording information in the form of a recording description file, and that it contains a signal playback block, fetching information from the recording description file during the playback of signal and controlling playback of the signal on the basis of information retrieved fetched from the recording description file.

Information on the course of the recording is sufficient when the recording description file consists of a record, providing information about the start of the recording and consisting of at least one record describing the state of the signal during the recording and a record informing about the end of the recording and the file end.

The idea of the invention is also that in the method of recording the analogue or digital signal, in the case when there is a break in access to the correct analogue or digital signal, the recording of the signal is stopped until signal reception is resumed or access to the correct and proper signal is obtained, and information on the recording process is stored in the device.

Information on the recording process can contain information about the time of occurrence and duration of breaks in access to the correct signal. Information on the recording process can be recorded in the recording description file.

Preferably, the record description file should contain a record that provides information about the start of the recording, at least one record that describes the recording status during recording of the signal and a record informing about the end of the recording process and the file end.

A break in access to the signal can be due to a failure of power supply, and/or a break of access to the source of the analogue or digital signal.

Recording duration can include the duration of breaks of access to the correct signal which occurred during recording and the duration of correct recording.

Preferably, when playing back the recorded signal, at the time of occurrence of a break in access to the signal, the description of which was stored in the device, the defined image is displayed during the break or a defined earlier time, at the same time displaying programme duration, or only the duration of the programme is displayed, or it is made possible to advance to the place at which of_access to the correct signal was resumed.

Advancement to the place of resumption of access to the signal can be made automatically or at a request of the user.

Storing information on the course of the recording can be started from the creation of the recording description file, which contains information about whether in a given time of the recording, there was access to the correct analogue or digital signal. Next checked can be whether the status of the source signal has been changed, in which case the change of status can be registered in the recording description file, and if a loss of signal occurs the recording can be stopped until reception resumes ending the recording time ends, while the time of break duration can be counted in the time of recording duration, and information on a signal loss can be stored in the file. Conversely, given proper, uninterrupted signal reception, monitoring of the source signal can be continued and after detecting the end of the recording procedure, information on the end of the recording can be inserted in the recording description file and the recording description file can be closed.

After switching on the receiver, after the occurrence of a power failure shortage of power supply, the last record of description of the last recording can be checked and information on the last programmed recording is checked, the duration of the programmed recording, the current time and the real time of the recording. Based on them, it can be decided if the programme recording should be resumed, while after finding out that the recording should be resumed, the last record of the recording description file can be updated and the recording can be continued. If the programmed recording time has elapsed and the recording therefore cannot be resumed, the last record of the recording description file can be updated and the recording can be ended.

Preferably, after selecting the option of playback of the recorded signal, the recording description file, stored in the device, is opened, and the first record of the recording description is read, and next, it is checked if the signal has been correctly recorded in the section of time of the read record, while with a correctly recorded signal, the recording is played to the end of time, determined by the read record. On the other hand, if the signal has not been received correctly in the read section of time, a check is made of the user options that are related to the behavior of the receiver in case of detecting information on a lack of signal in the recording description file, while afterwards there is an action executed, connected with the lack of signal, determined by the user options. Next, a check is made if the recording description file contains the next record and after finding the next record, it is analyzed, while in case of a lack of the next record, the playback is ended.

In the accompanying drawings one of the possible embodiments of the present invention is shown, where:
Fig. 1 presents a block diagram of a television signal receiving block, with a circuit for registering breaks in access to a signal;
Fig. 2 presents a flow chart of a procedure of recording television signals;
Fig. 3 presents a file definition describing a break in access to a signal;
Fig. 4 presents a flow chart of a procedure of television signal playback; and
Fig. 5 presents a flow chart procedure of resumption of a receiver work after a loss of power supply.

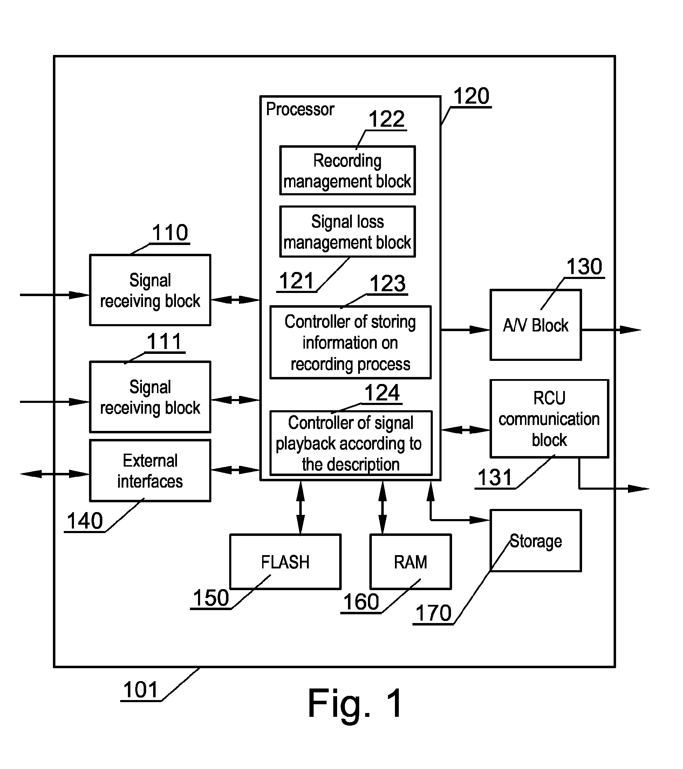

The signal receiver, which can be, for example, a digital television decoder 101, to which the solution presented in the description can be adopted, is illustrated in Fig. 1. It is a simplified version, which contains only the essential elements required for representing the idea of the invention. The most important circuit of the receiver is the processor 120, which manages the work of the device. The processor contains a television signal recording management block 122, which enables storage of data in a recording device, for example in a non-volatile memory 170. Additionally, the processor contains an internal circuit for television signal loss management 121 that controls detection of the signal and generates data, which describe breaks in the recorded television programme. Moreover, separate modules 123, 124 are responsible respectively for generating data which describes the recording process and storing information in the form of a recording description file. These modules are also responsible for fetching information from the recording description file during signal playback and controlling the playback of signals on the basis of such information, fetched from the recording description file. In another example of the embodiment, the blocks 121, 122, 123, and 124 can be separate modules placed outside the processor. A signal is transmitted to the processor from a signal receiving block 111, and optionally a signal from a second signal receiving block 110. With application of the second signal receiving block, the receiver can simultaneously record data from two television channels. Additionally, the processor has a capability of bi-directional data exchange via external interfaces 140. The digital television decoder also contains several types of memory which are connected bi-directionally with the processor. These are: FLASH memory 150, in which, for example, the operating system is stored, operational memory RAM 160, where the buffered audio/video data can be stored temporarily. There is also a possibility of storing the buffered data in the selected segment of the non-volatile memory, this being a cheaper solution. The non-volatile memory 170 is usually a hard drive. There are also programs controlling operation of the digital television decoder stored in these memories. Blocks 130 and 131, respectively, make it possible to transmit the output A/V signal and communicate with external control devices of the receiver, for example, a remote control unit.

Another receiver based on the presented solution, in which information on the course of recording can be stored, can be a radio with the signal recording capability.

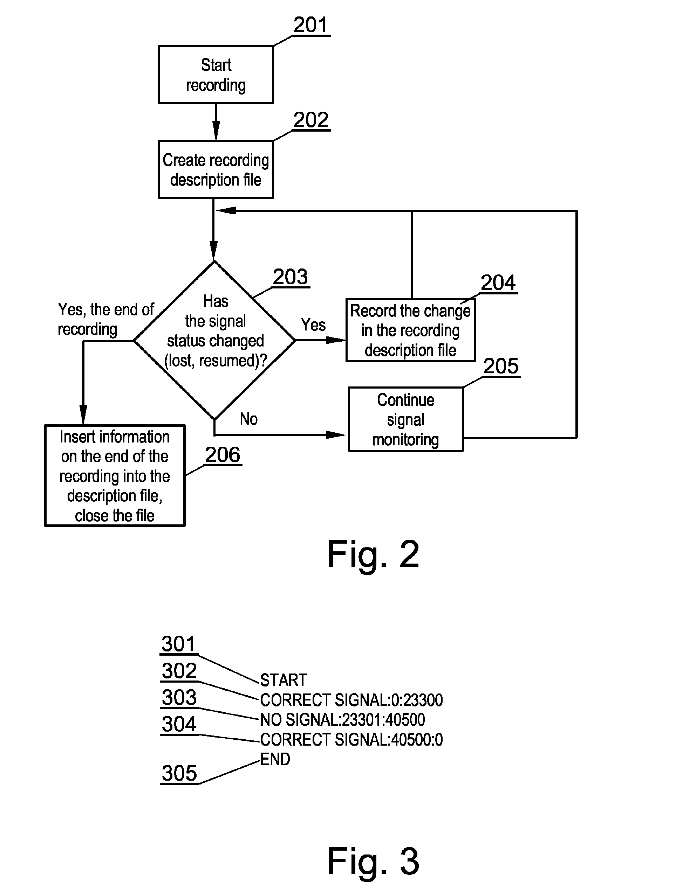

Fig. 2 presents a method of recording audio/video material, in case, when there is a break in access to the correct source signal. Such break can be caused for example by a shortage of an antennal signal, a change of the settings of the access block or a change of the settings of the parental control. The procedure starts at step 201 when recording of the audio/video material is started. Next, just after recording is started and it is determined if there is access to the correct or proper source signal, a recording description file is created in step 202. Such file contains information about if there was access to correct data of the audio/video material at a given time of recording of the programme. The recording description file is illustrated more precisely in Fig. 3. Next, in step 203 of the procedure, the status of the source signal is checked and whether it has changed, for example, if correct reception has ceased or has subsequently been resumed.

In order to more conveniently view recorded material later, a change of the status can be registered, when it lasts, for example, longer than a second, in the case of a change of the status to the correct signal, or additionally, in connection with time monitoring, it is checked whether the change has occurred a specific number of times, in the case of a change of the status to signal loss. Other schemes of monitoring the status change may be introduced; however, they are not the object of this invention.

If status of the signal has changed, in step 204 of the procedure, this change is recorded in the recording description file. If signal failure has occurred, recording of audio/video material will be stopped until the time of a return of the correct signal or access to the signal obtained or the end of recording, while the time of break duration is counted in the time of recording duration. Information on the signal loss is inserted in the recording description file. Next, the procedure returns to step 203. If the signal status remains unchanged, monitoring of the source signal is continued in step 205. If, in step 203, the system detects the end of the recording procedure, information is inserted in the recording description file in step 206 on the end of the recording and the description file is closed.

Fig. 3 shows a definition of the file, describing breaks in access to the signal and its status during the whole recording of the audio/video material. The recording description file consists of three parts: the record providing information about the start of the recording, at least one record describing the status of the recording in the given time and the record providing information about the end of the recording and the file end. The record, providing information about the start of recording, in the example quoted, is the key word "START" 301, inserted at the beginning of the exemplary description file. The record, providing information about the end of the recording, is the key word 'END" 305 in the example quoted, inserted at the end of the exemplary description file. The records 302, 303 and 304, included in the recording description file between the above mentioned key words, describe changes of the status of the source signal of the recording, in relation to time. In the example quoted, the record consists of three fields: the record type, time of status-change occurrence and time of the end of a given status. In another example of the embodiment, the time of ending the state can be omitted and calculated on the basis of data of the next record. The record type informs whether the signal was correctly received at the time defined by the further quoted time values, or if there were breaks in access to the source signal. Record 302 indicates that from the beginning of the recording to time 23300, stated in milliseconds, the signal was received correctly. The record 303 informs that from the 23301^{st} millisecond of the recording to the 40500^{th} millisecond a signal loss occurred. Record 304 informs that from the 40501^{st} millisecond of the recording to the end of the audio/video material (in the example of the embodiment defined by quoting "0" value), the data was received correctly. The description file does not contain a great quantity of data, because in the majority of cases it will only require the entry of a single record that defines that the whole recording is correct.

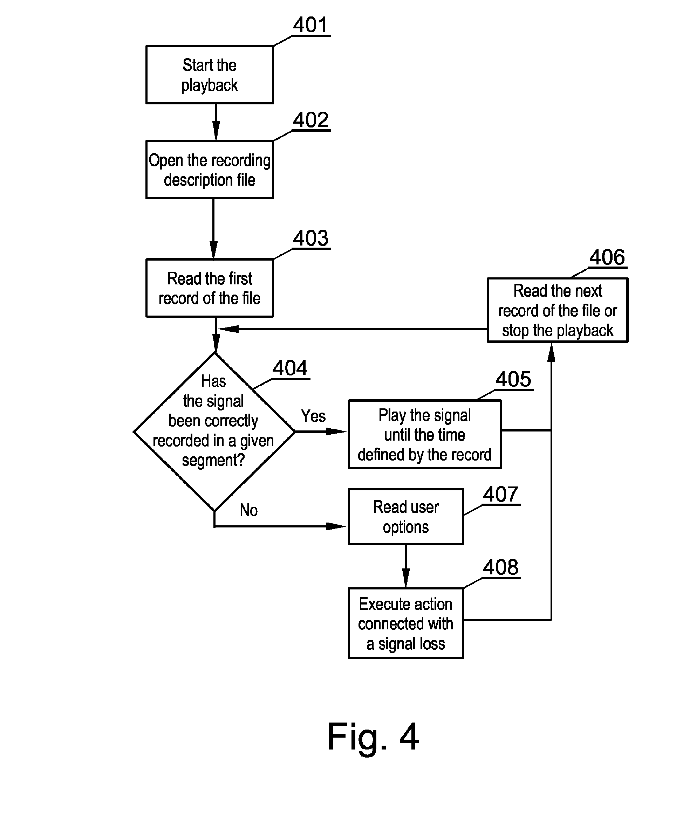

Fig. 4 presents a method of playback of audio/video material recorded in the storage of the receiver. The procedure starts in step 401 at the moment when the user selects the option of playback of the recorded audio/video material. Concurrently with step 401 of the procedure or just afterwards, the recording description file is opened in step 402. When opening the file, one can also execute a procedure to check if it contains correct data describing the recording. Then, in step 403, the first record of the description of the given recording is read. Next, in step 404, it is checked if the audio/video material was recorded correctly in a given section of time. If the audio/video material was correctly recorded, the procedure moves to step 405, where the recording is played until the end of its allotted time, determined by the current record of the recording description file. Next, the procedure goes to step 406. If the audio/video material has not been received correctly in a given segment of time, the procedure moves to step 407. In step 407 there is a check of the user options, related to the behaviour of the receiver if there is information about a loss of signal in the recording description file. Such options include, for example, a jump to a place when the signal was being correctly received, or the time of displaying information on unavailability of the source signal and the method of displaying such information on the screen of the television receiver. Next, step 408 of the procedure initiates a procedure, related to signal loss which can be determined by user options. The last step of the procedure is to check in step 406 if the recording description file contains the next record. If the file contains the next record, the procedure recovers that record and next moves to step 404. If there is no subsequent record, the playback is ended.

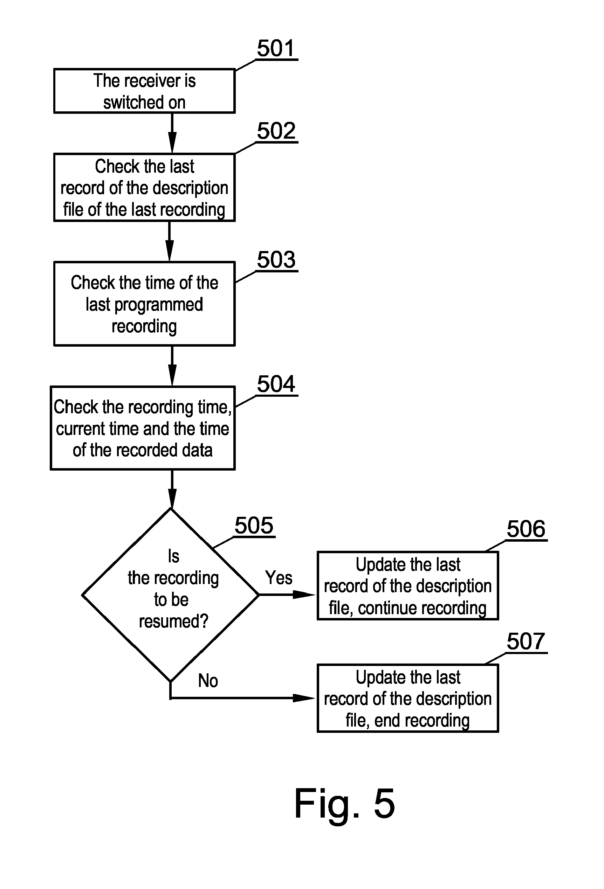

Fig. 5 presents a procedure of switching on the receiver after a power failure. It starts in step 501 from switching on the receiver. Next, in step 502, the last record of the description of the last recording is checked. Next, in step 503 of the procedure, time of the last programmed recording is checked. Steps 502 and 503 have the purpose of determining if there is an incomplete recording in the system from before the moment of a possible power-supply loss. In step 504, the duration of the programmed recording, the current and the real time of the recording are checked, and on the basis of them, in step 505, it is checked if the programmed recording should be resumed. In case, when the recording should be resumed, the procedure moves to step 506, where the last record of the recording description file is updated and the recording is continued. In opposite case, when the programmed recording time has already passed and the recording should not be resumed, the procedure moves to step 507, where the last record of the recording description file is updated and the recording is ended, executing such tasks as for example deleting the entry programming the receiver to the given recording.

The device for which the solution is applicable is a digital television receiver, equipped with a non-volatile memory, in which recorded data is stored, for example, in the form of a hard drive or a DVD disc. In case, when a break in reception of the television signal occurs, information is stored in the receiver from the commencement of the break from the registered time to the later registered time of the end of the break. Also the so called "black screen" is not recorded, as is the case with video cassette recorders. During playback, the described break in the recording information file is a recorded signal from the point of view of the user.

A lack of access in another embodiment can be defined as the lack of access rights due to conditional access system configuration or parental control settings.

Additionally, according to the invention, there is provided a possibility of a jump to the correctly recorded signal. The jump can be realized automatically when a break is detected or at a request of the user.

The preferred embodiment having been thus described, it will now be evident to those skilled in the art that further variation thereto may be contemplated. Such variations are not regarded as a departure from the invention, the true scope of the invention being set forth in the claims appended hereto.

## Claims

1. A device for receiving analogue or digital signal, capable of signal recording and equipped with a processor, a television signal recording management block and a memory **characterized in that** to the processor (120) are linked a signal loss management block (121) managed by the processor (120), a signal recording management block (122) managed by the processor (120) and generating data describing a recording process of an analogue or digital signal conducted in a recording device and cooperating with the signal loss management block (121), a block (123) storing information on the recording process in the memory wherein the information is received form the signal loss management circuit (121) and the signal recording management block (122) and stored in a recording description file and a signal playback block (124) fetching the information from the recording description file during a signal playback and controlling the signal playback of a recorded signal according to the information fetched from the recording description file.

2. The device, according to claim 1, **characterized in that** the recording description file describing the recording process includes a record (301) informing about a start of a recording, at least one record (302, 303, 304) describing a status of the analogue or digital signal during recording of the analogue or digital signal and a record (305) providing information about an end of the recording and a file end.

3. A method of recording an analogue or digital signal, comprising the steps of
starting a signal recording process;
detecting a break in access to an analogue or digital signal during the signal recording process;
stopping the signal recording process of the analogue or digital signal until time of resuming access to the analogue or digital signal; and
storing information on the signal recording process.

4. The method, according to claim 3, **characterized in that** the information on the signal recording process consists of information on time of occurrence and duration of breaks in access to the analogue or digital signal and wherein the information on the signal recording process is stored in a recording description file.

5. The method, according to claim 4, **characterized in that** the recording description file consists of a record, informing about a start of the signal recording process, at least one record describing a status of the signal recording process during the signal recording process and a record providing information about an end of the signal recording process and a file end.

6. The method, according to claim 3, **characterized in that** the break in access to the analogue or digital signal is caused by a power supply shortage.

7. The method, according to claim 3, **characterized in that** the break in access to the analogue or digital signal is caused by lack of access to a correct analogue or digital signal.

8. The method, according to claim 3, **characterized in that** duration of the signal recording process consists of duration of breaks in access to the analogue or digital signal, which occurred during the signal recording process and time of a correct recording.

9. The method, according to claim 3, **characterized in that** during a playback of a recorded signal, at time when the break occurred in access to the analogue or digital signal occurred, description of which was stored in a memory, a defined image is displayed during the whole time of the break or a earlier-defined time, displaying at the same time a program duration or an elapsed time from a program beginning.

10. The method, according to claim 3, **characterized in that** during a playback of a recorded signal, at time when the break occurred in access to the analogue or digital signal, description of which was stored in a memory, a program duration or an elapsed time from a program beginning is displayed.

11. The method, according to claim 3, **characterized in that** during a playback of a recorded signal, at time, when the break occurred in access to the analogue or digital signal, it is made possible to advance to a place of resuming access to a correct signal.

12. The method, according to claim 11, **characterized in that** advancement to the place of resuming access to the correct signal is executed automatically or at a user request.

13. The method, according to claim 3, **characterized in that** the storing of information on the recording process starts from creation of a recording description file, which includes information determining if there was access to a correct analogue or digital signal at a given moment of program recording, and next it is checked if a signal status changed, while at change of the signal status, the change of status is registered in the recording description file, and when there is a lack of signal, the recording is stopped until time when the correct signal is received or until an end of recording, while time of the break duration is counted in the recording duration, and information on loss of the analogue or digital signal is inserted in the recording description file, otherwise, with an unchanged signal status, monitoring of the source signal is continued and after detecting the end of the recording procedure, information is inserted in the recording description file on the end of the recording and the recording description file is closed.

14. The method, according to claim 6, **characterized in that** after switching a receiver on, after the power supply shortage occurred, the last record of the description of recording, being in progress at the occurrence of power supply shortage, is checked and information related to the programmed recording is checked, the duration of the programmed recording, the current time and the real time of the recording and based on them, it is determined if the programmed recording shall be resumed, while after determining that the recording shall be resumed, the last record of the recording description file is updated and the recording is continued, while after determining that the programmed time of the recording has passed and the recording shall not be resumed, the last record of the recording description file is updated and the recording is ended.

15. The method, according to claim 3, **characterized in that** after initiating a playback of a recorded signal, a recording description file, stored in a memory, is opened, and the first record of a recording description is read, next, it is checked if the analogue or digital signal was correctly recorded, and when the analogue or digital signal was correctly recorded, the recording is played until an end of time specified by a read record, otherwise an action connected with a lack of the analogue or digital signal is executed, and next a check is made if the recording description file contains the next record and after finding the next record, the latter is analyzed, while in case of lack of the next record the playback is ended.
